# EUROPÄISCHE PATENTSCHRIFT

(11) **EP 2 204 226 B1**
(45) Veröffentlichungstag und Bekanntmachung des Hinweises auf die Patenterteilung: **17.02.2016**
(21) Anmeldenummer: 09015062.4
(22) Anmeldetag: 04.12.2009
(51) Int. Cl.: F16K 15/03, E03F 5/14, B01D 21/24

(54) **Vorrichtung zur Sicherung eines Behälters gegen ein Eindringen von Flüssigkeit und Abscheidevorrichtung**
Device for securing a container/separator against backflow of liquids
Dispositif de protection d'un récipient contre le reflux d' un liquide et dispositif de séparation muni de cette protection

(30) Priorität: 17.12.2008 DE 202008017436 U; 16.06.2009 DE 102009025388
(43) Veröffentlichungstag der Anmeldung: 07.07.2010
(73) Patentinhaber: Opanski, Josef Zoltan, 88339 Bad Waldsee (DE)
(72) Erfinder: Opanski, Josef Zoltan, 88339 Bad Waldsee (DE)
(74) Vertreter: Otten, Roth, Dobler & Partner mbB Patentanwälte

(56) Entgegenhaltungen:
- EP-A1- 1 507 045
- CH-A- 486 061
- US-A- 2 644 333
- US-A1- 2005 045 228
- US-A1- 2007 294 858

## Beschreibung

### Stand der Technik

Bei Behältern zur Aufnahme einer Flüssigkeit, welche über einen Zulauf dem Behälter zufließen und über einen Ablauf aus dem Behälter abfließen kann, werden insbesondere als Durchlaufbehälter konzipiert. Ausgehend von dem leeren Behälter füllt sich dieser bei der Inbetriebnahme durch zufließende Flüssigkeit bis zu einem Flüssigkeitsniveau im Behälter, das sich durch ein Ablaufniveau des Ablaufs bestimmt und im Regelbetrieb selbstregelnd erhalten bleibt. Über den Ablauf mündet die aus dem Behälter abfließende Flüssigkeit im Gefälle z.B. in einen Hauptkanal eines Abwassersammelsystems bzw. eines Kanalnetzes. Der Behälter kann z.B. zur Behandlung von Abwässern wie insbesondere zur Trennung von festen und/oder flüssigen Flüssigkeitsfraktionen dienen, zum Beispiel in einem Leichtflüssigkeitsabscheider. Im Betrieb von solchen Behältern können neben einem Regelbetrieb unterschiedlichste Sonder-Betriebszustände auftreten, die sich durch zulaufseitige und/oder ablaufseitige Gegebenheiten auf den Betrieb des Behälters auswirken.

Außerdem ist der Behälter in der Regel mit einem selbsttätigen in der Flüssigkeit schwimmfähigen Schwimmkörper versehen, der so austariert ist, dass über dessen Position in dem flüssigkeitsgefüllten Behälter, die von der Art bzw. der Menge der Flüssigkeit abhängt, der Ablauf für ein weiteres Abfließen von Flüssigkeit aus dem Behälter blockiert wird. Dies kann beispielsweise dann der Fall sein, wenn in einem Abscheiderbehälter eine abzuscheidende Flüssigkeitsfraktion eine maximal tolerierbare Menge im Behälter erreicht hat.

Ein weiteres Eindringen von Flüssigkeit in den Behälter führt in dieser Situation zu unkontrollierten Betriebszuständen des Behälters.

### Aufgabe und Vorteile der Erfindung

Aufgabe der vorliegenden Erfindung ist es, eine Vorrichtung der eingangs genannten Art so auszubilden, dass es sicher und praktikabel möglich ist, den Behälter in unterschiedlichen Betriebssituationen in einem kontrollierten Zustand zu halten.

Diese Aufgabe wird durch die unabhängigen Ansprüche gelöst.

In den abhängigen Ansprüchen sind vorteilhafte Weiterbildungen der Erfindung definiert.

Die Erfindung geht zunächst aus von einer Vorrichtung zur Sicherung eines Behälters gegen ein Eindringen von Flüssigkeit über einen Ablauf des Behälters, wobei in einem Regelbetrieb des Behälters die Flüssigkeit über einen Zulauf dem Behälter zufließen und über den Ablauf aus dem Behälter abfließen kann, wobei im Behälter ein in der Flüssigkeit schwimmfähiger Schwimmkörper vorhanden ist, dessen Position in dem Behälter von der Art und/oder der Menge der Flüssigkeit in dem Behälter abhängt und der Schwimmkörper für einen selbsttätigen Verschluss einer Ablauföffnung des Ablaufs ausgebildet ist.

In einem Regelbetrieb kann die Flüssigkeit dem Behälter über den Zulauf zufließen. Bei Erreichen eines vorgegebenen Füllniveaus im Behälter kann die Flüssigkeit über einen Ablauf den Behälter verlassen bzw. wenn keine Flüssigkeit dem Behälter weiter zuläuft, stellt sich das vorgegebene Flüssigkeitsniveau im Behälter als maximales Füllniveau im Regelbetrieb ein. Unter einer Flüssigkeit wird insbesondere eine Flüssigkeit, ein Flüssigkeitsgemisch und/oder eine Flüssigkeit verstanden, die flüssige und/oder feste Stoffe mit sich führt, also zum Beispiel ein Abwasser, wobei nachfolgend in der Regel von Flüssigkeit gesprochen wird.

Bei einem Behälterzustand, wenn beispielsweise eine maximale Aufnahmekapazität für eine im Behälter angesammelte bzw. zurückgehaltene Menge wenigstens einer Komponente aus der zufließenden Flüssigkeit im Behälter erreicht wird, verschließt der Schwimmerverschluss den Ablauf bzw. eine Ablauföffnung des Ablaufs. So wird verhindert, dass die zurückgehaltene Komponente über den Ablauf abfließen kann. Anschließend muss der Betrieb des Behälters gestoppt werden und die zurückgehaltene Komponente des Behälters kann kontrolliert behandelt bzw. entsorgt werden.

Problematisch sind insbesondere Situationen, in denen Flüssigkeit durch den Ablauf in den Behälter zuläuft, was einer Rückstausituation entspricht. Der Behälter mit dem Schwimmkörper als Schwimmerverschluss ist für diese Situation nicht ausgelegt, was einer unkontrollierten Betriebssituation entspricht, die zu vermeiden ist.

Gemäß einem ersten wesentlichen Aspekt der Erfindung ist daher ein im Behälter integrierbares Rückstauventil vorhanden, das im Ablauf eine Ventilöffnung der Flüssigkeit selbsttätig freigibt oder sperrt, wobei die Ventilöffnung in Abfließrichtung der Flüssigkeit über den Ablauf nach der Ablauföffnung positioniert ist. Mit dem selbsttätig arbeitenden Rückstauventil kann ein unerwünschtes Zulaufen von Flüssigkeit in den Behälter über den Ablauf sicher vermieden werden. Die Sicherung mit dem Rückstauventil ist immer funktionsbereit und erfolgt jederzeit bzw. dauerhaft insbesondere unabhängig von der Stellung des im Behälter integrierten Schwimmerkörpers bzw. Schwimmerverschlusses. Durch die erfindungsgemäße Positionierung des Rückstauventils bzw. der Ventilöffnung bleibt die Funktion des Schwimmkörpers zum Verschließen des Ablaufs unbeeinflusst. Der Regelbetrieb ist immer gewährleistet.

Das Rückstauventil kann übergeordnet auf eine Rückstausituation reagieren, unabhängig von der Situation im Hinblick auf das Einwirken des Schwimmkörpers auf die Ablauföffnung. Dies erhöht die Zuverlässigkeit und Betriebssicherheit des Behälters insbesondere in Rückstausituationen. Dies ist insbesondere bei Abscheideranlagen bzw. Leichtflüssigkeitsabscheidern von grundlegender Bedeutung. Denn damit kann jederzeit sicher vermieden werden, dass durch eine Rückstausituation über den Ablauf Flüssigkeit in den Behälter fließt und so wassergefährdende Stoffe wie aufschwimmende Leichtflüssigkeit im Behälter, z.B. Benzin, Diesel oder Öl, über eine regelmäßig vorhandene freie Öffnung in einem Behälterdeckel aus dem Behälter unkontrolliert austreten.

Auch bei Anordnungen, bei welchen außerhalb des Behälters in einem Abschnitt, in welchen der Ablauf mündet, eine Sicherung vorhanden ist, die gegen ein Eindringen von Flüssigkeit in den Ablauf bzw. in den Behälter von einem Sammelkanal oder dergleichen wirkt, ist das im Behälter integrierte Rückstauventil vorteilhaft. Das Rückstauventil ist im Behälter insbesondere nahe der Behälterwand bzw. kurz vor dem Durchtritt des Ablaufs aus dem Behälter nach außen positioniert. Da ein Versagen oder eine Undichtigkeit der äußeren Sicherung bzw. eine Flüssigkeit, die sich in einem Leitungsabschnitt zwischen dem Behälter und der äußeren Sicherung anstaut, nie ausgeschlossen werden kann, ließe sich ohne erfindungsgemäßes Rückstauventil im Behälter ein ungewollter Zufluss von Flüssigkeit über den Ablauf in den Behälter nie sicher vermeiden.

Die Ventilöffnung ist in Ablaufrichtung der Flüssigkeit aus dem Behälter hinaus nach der Ablauföffnung positioniert. So wird unabhängig von der Position des Schwimmerkörpers im Behälter die Ventilöffnung gesperrt, so dass auf eine Rückstausituation jederzeit und frühzeitig reagiert werden kann. Vorteilhaft ist die Ventilöffnung auf einem vertikalen Niveau, das dem Ablaufniveau des Ablaufs entspricht oder nur geringfügig zu diesem vertikal versetzt ist. Die Ventilöffnung ist bevorzugt innerhalb einer Ablaufleitung des Ablaufs vorhanden, die sich insbesondere als mehrfach abgewinkelte Leitung von einem bodennahen Bereich des Behälters, wo auch die Ablauföffnung der Ablaufleitung vorhanden ist, bis nach oben zu einem Durchlass im oberen Bereich der Wand des Behälters erstreckt, wobei durch den Durchlass der Behälterwand die Ablaufleitung nach außen führt. Besonders geeignet ist es, wenn die Ventilöffnung am oberen Ende eines vertikal sich erstreckenden Abschnitts der Ablaufleitung vorhanden ist. Die mit der Ventilöffnung gebildete Ebene liegt insbesondere zumindest nahezu horizontal räumlich ausgerichtet.

Vorteilhafterweise ist das Rückstauventil derart ausgebildet, das Eindringen von Flüssigkeit über den Ablauf in den Behälter durch Sperren der Ventilöffnung zu verhindern. Die Ventilöffnung ist bevorzugt nicht identisch mit der Ablauföffnung, wenngleich beide dem Ablauf zugeordnet sind und nur dann ein Abfließen von Flüssigkeit aus dem Behälter über den Ablauf möglich ist, wenn diese beide Öffnungen offen sind. Der Zustand der Ablauföffnung im Zusammenspiel hat vorteilhafterweise aber keine Auswirkung auf die Sicherheitsfunktion des Rückstauventils, insbesondere kann die Rückstausicherung auch dann reagieren und die Ventilöffnung sperren, egal ob die Ablauföffnung offen ist oder nicht.

Durch die Ventilöffnung wird zusätzlich zur Ablauföffnung, auf welche der Schwimmerkörper wirken kann, davon unabhängig eine weitere bzw. separate Öffnung bereitgestellt. Damit wird funktional getrennt für unterschiedliche Betriebssituationen eine eigene Sicherung des Ablaufs bereitgestellt.

Grundsätzlich ist auch eine bauliche bzw. örtliche Kombination des Verschließens des Ablaufs der Ablauföffnung mit dem Rückstauventil nicht ausgeschlossen, was aber konstruktiv aufwändiger sein kann bzw. ggf. weniger praktikabel ist.

Das Rückstauventil ist insbesondere so ausgestaltet, um die Mindestanforderung des Rückstauventils zu erfüllen, wonach ein Eindringen von Flüssigkeit in den Behälter über den Ablauf, also über die "falsche Seite" verhindert wird. Diese Zustände werden im Sinne der Erfindung allgemein als Rückstausituation bezeichnet, da diese den entsprechenden Praxisfall beschreibt.

Eine Rückstausituation kann beispielsweise bei einem Behälter, der an ein Abwassersammelsystem bzw. einem Abwasserkanal ablaufseitig angeschlossen ist, dann auftreten, wenn bei Überlastung zum Beispiel bei einem Gewitter oder einer Überschwemmung mehr Abwasser im System anfällt, als maximal abfließen kann. Der Abwasserkanal kann dann zumindest abschnittsweise voll laufen und einen hydraulischen Druck in dem Kanalsystem erzeugen, der sich an Stellen auswirkt, an denen im Normalbetrieb kein nennenswerter hydraulischer Druck ansteht, z.B. an dem Abschnitt, in den die Ablaufleitung aus dem Behälter mündet. Damit kommt es im System zu einer Umkehr der Fließrichtungen und Abwasser kann einen Rückstau am Behälter verursachen.

Mit dem vorgeschlagenen Rückstauventil wird in der Richtung vom Kanal in den Behälter vorteilhafterweise ein hydraulischer Druckausgleich unterbunden. Bei offenem Ablauf kann das Behälterinnere und der Abwasserkanal gemäß dem Prinzip der kommunizierenden Röhren, miteinander verbunden sein, womit ein Ausgleich der hydraulischen Drücke zwischen dem Behälter und dem Abwasserkanal stattfinden kann, was auch zweckmäßig ist.

Bei einer Rückstausituation hat die Wirkung dieses Prinzip aber fatale Folgen, denn dann kann Flüssigkeit vom Abwasserkanal in den Behälter strömen. Selbst für den Fall, dass der Schwimmerkörper die Ablauföffnung im Behälter von innen verschließt, ist der hydraulische Druck im Behälter, mit dem der Schwimmerkörper gegen die Ablauföffnung drückt, in aller Regel geringer, als der hydraulische Druck an der Ablauföffnung, der vom Abwasserkanal ansteht, so dass der Schwimmerkörper von der Ablauföffnung weggedrückt wird und Flüssigkeit vom Abwasserkanal in den Behälter mit höherem Druck eindringt.

Mit dem Rückstauventil wird eine Anordnung im Ablauf eingerichtet, das bei einer Rückstausituation den Ablauf verschließt, wenn ablaufseitig ein höherer hydraulischer Druck ansteht als behälterseitig.

Weiter wird vorgeschlagen, dass das Rückstauventil derart ausgebildet ist, die Ventilöffnung für Flüssigkeit in Abhängigkeit von einem an dem Rückstauventil anstehenden hydraulischen Druckverhältnis selbsttätig freizugeben oder zu sperren. Damit kann bei einem hydraulischem Druck durch Flüssigkeit im Behälter, der höher ist als ein hydraulischer Druck, der von außen bzw. von dem Abwasserkanal ansteht, bezogen auf die Ventilöffnung bzw. auf zwei gegenüberliegende Seiten des Rückstauventils, das Rückstauventil die Ventilöffnung freigeben und Flüssigkeit kann aus dem Behälter über den Ablauf abfließen. Dieser in der Praxis allenfalls nur kurzzeitig auftretende Zustand ermöglicht sozusagen ein phasenweises Abfließen von Flüssigkeit aus dem Behälter, obwohl ablaufseitig Flüssigkeit ansteht. Sobald die hydraulischen Druckverhältnisse sich wieder umkehren sperrt das Rückstauventil die Ventilöffnung wieder.

Somit kann jederzeit bei einem entsprechenden anstehenden hydraulischen Druckverhältnis einem kritischen Anstieg von Flüssigkeit im Behälter entgegengewirkt werden. Da dies nur funktioniert, wenn der ablaufseitige hydraulische Druck an dem Rückstauventil behälterseitig überstiegen wird, ist z.B. zusätzlich eine selbsttätige Zulaufsperre vorzusehen, die ein weiteres Zufließen von Flüssigkeit in den Behälter über den Zulauf in solchen Situationen verhindert.

Insbesondere ist es vorteilhaft, dass das Rückstauventil ausgebildet ist bei Regelbetrieb des Behälters, wenn keine Flüssigkeit über den Ablauf aus dem Behälter abfließt, die Ventilöffnung zu sperren. Dies kann zum Beispiel in einem Zustand sein, in dem keine Flüssigkeit über den Zulauf zufließt bzw. der Behälter noch in einem Füllvorgang ist und seine Flüssigkeitsniveau im Regelbetrieb noch nicht erreicht hat. Das Rückstauventil ist bevor sich eine Rückstausituation einstellen kann, in einer sicheren Bereitschafts- bzw. Sperrposition, was bei einer sich plötzlich einstellenden Rückstausituation vorteilhaft ist, da keine Zeit vergeht bis das Rückstauventil in die Sperrposition gelangt.

Bevorzugt ist das Rückstauventil in einer separat einbaubaren Baueinheit integriert. Beispielsweise kann in der Ablaufleitung des Ablaufs ein Zwischenabschnitt durch die dicht anbaubare Baueinheit gebildet werden, ggf. auch ausgetauscht oder nachträglich eingesetzt werden. Die Ablaufleitung kann insbesondere in der Art eines Ablaufsiphons gestaltet sein, wobei die an- und abmontierbare Baueinheit einen Teil des im Behälter vorhandenen Ablaufsiphons bildet. Die Baueinheit kann ein dichtes Gehäuse umfassen, das im Inneren einen Leitungsabschnitt der Ablaufleitung bereitstellt und das eigentliche Rückstauventil aufweist. Die Baueinheit kann komplett vorgefertigt und auf Dichtigkeit geprüft installiert werden. Dies schließt spätere Montagefehler beim Einbauen aus, wie beispielsweise undichte Zwischenleitungen und dergleichen.

In einer vorteilhaften Modifikation der Erfindung ist die Baueinheit über Flanschabschnitte und Schraubmittel mit benachbarten Abschnitten verbindbar. Die Baueinheit mit der Rückstausicherung kann mit entsprechend angepassten Abschnitten z.B. der Ablaufleitung bzw. des Ablaufsiphons verbunden werden.

Es ist außerdem vorteilhaft, dass die Baueinheit im eingebauten Zustand einen Abschnitt einer Ablaufleitung des Ablaufs umfasst, in welchem das Rückstauventil integriert ist. Dies ermöglicht durch eine entsprechende saubere Vorfertigung der Baueinheit, die bei der Herstellung auf Funktion und Dichtigkeit geprüft ist, diese mit hoher Zuverlässigkeit bereitzustellen.

Bevorzugt ist das Rückstauventil als Klappenventil ausgebildet. Ein Klappenventil stellt ein insbesondere robustes und einfach gebautes Bauteil dar. Das Klappenventil kann eine Klappe als Ventilkörper und einen auf die Klappe abgestimmten Ventilsitz umfassen, womit in Schließstellung des Ventils der Ablauf bzw. ein Leitungsquerschnitt der Ablaufleitung flüssigkeitsdicht schließbar ist.

Außerdem ist es weiter vorteilhaft, dass das Rückstauventil eine schwenkbar gelagerte Verschlussklappe umfasst. Eine schwenkbar gelagerte Verschlussklappe ist funktionssicher und robust. Bevorzugt sperrt die Verschlussklappe in einer zumindest annähernd horizontalen Ausrichtung den Ablauf. Insbesondere wird die Verschlussklappe in einer vertikalen Höhe eines Ablaufniveaus des Ablaufs positioniert. Damit kann erreicht werden, dass die Ventilöffnung nur dann gesperrt wird, wenn der ablaufseitig am Rückstauventil anstehende hydraulische Druck größer ist als der hydraulische Druck am Rückstauventil, durch den im Regelbetrieb gefüllten Behälter.

Vorteilhafterweise ist das Rückstauventil ausgebildet, einen sich in vertikaler Ausrichtung erstellten Abschnitt des Ablaufs zu sperren. So kann insbesondere vorteilhaft ein Steigleitungsabschnitt bzw. in einem Abschnitt einer sich vertikal erstreckenden Steigleitung des Ablaufs das Rückstauventil integriert werden. In der Regel ist der Ablauf mit einem Ablaufsiphon versehen, der einen vertikal ausgerichteten Abschnitt der Ablaufleitung umfasst, so dass das Rückstauventil in diesem Bereich einrichtbar ist, insbesondere am oberen Ende des vertikal ausgerichteten Abschnitts.

Die Erfindung betrifft außerdem eine Abscheidevorrichtung mit einem Behälter, wobei in einem Regelbetrieb des Behälters die Flüssigkeit über einen Zulauf zufließen und über einen Ablauf aus dem Behälter abfließen kann, mit einem in der Flüssigkeit schwimmfähigen Schwimmerkörper, dessen Position in dem Behälter von der Art und/oder der Menge der Flüssigkeit in dem Behälter abhängt, und der Schwimmerkörper für einen selbsttätigen Verschluss einer Ablauföffnung des Ablaufs ausgebildet ist. Die Abscheidevorrichtung ist erfindungsgemäß mit einer im Behälter integrierten Vorrichtung gemäß einer der vorgenannten Vorrichtungen versehen. Damit lassen sich die genannten Vorteile in einer Abscheidevorrichtung realisieren. Insbesondere ist die Abscheidevorrichtung ausgebildet, mehrere Flüssigkeitsanteile mit jeweils unterschiedlicher Dichte aufzunehmen, wobei der Schwimmerkörper derart ausgebildet ist, oben in einem ersten Flüssigkeitsanteil mit einer ersten Flüssigkeitsanteildichte zu schwimmen, wobei ein weiterer Flüssigkeitsanteil der Flüssigkeit mit einer geringeren Flüssigkeitsanteilsdichte als die erste Flüssigkeitsanteildichte auf dem ersten Flüssigkeitsanteil aufschwimmen kann. Dies ist insbesondere bei Leichtflüssigkeitsabscheidern zur Abscheidung einer Leichtflüssigkeit wie beispielsweise Öl, Benzin oder Diesel vorteilhaft.

### Figurenbeschreibung

Anhand einer in den Figuren stark schematisiert dargestellten Ausführungsform einer erfindungsgemäßen Abscheidevorrichtung werden weitere Vorteile und Merkmale der Erfindung erläutert.

Im Einzelnen zeigt:
- Figur 1: einen Ausschnitt einer erfindungsgemäßen Abscheidevorrichtung teilweise im Schnitt,
- Figur 2: ein vergrößertes Detail teils im Schnitt der in Figur 1 gezeigten Anordnung,
- Figur 3: die Anordnung gemäß Figur 2 in einem Zustand im Regelbetrieb der Abscheidevorrichtung, aus der Flüssigkeit abfließt und
- Figur 4: die Anordnung gemäß Figur 2 in einer Rückstausituation der Abscheidevorrichtung.

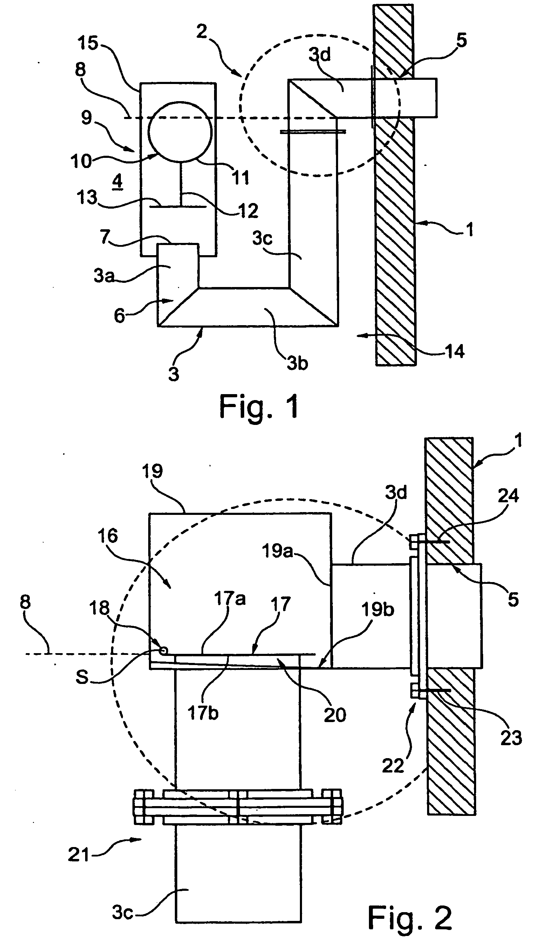

Figur 1 zeigt stark schematisiert und nicht maßstäblich einen Ausschnitt einer erfindungsgemäßen Abscheidevorrichtung, z.B. Leichtflüssigkeitsabscheider, wobei eine Behälterwand 1 eines Behälters der Abscheidevorrichtung geschnitten ist und einen Blick in den Behälter im Bereich eines Ablaufs 2 freigibt. Der Ablauf 2 umfasst einen Ablaufsiphon 3, der eine Ablaufleitung 6 für Flüssigkeit 14 aus einem Behälterinneren 4 nach außen bereitstellt. Der Ablaufsiphon 3 (in Figur 1 nicht geschnitten gezeigt) ist in Form eines mehrfach abgewinkelten Rohres ausgebildet und weist vier Teilstücke 3a, 3b, 3c und 3d auf, welche rechtwinklig abgewinkelt zueinander sind. Das erste Teilstück 3a ist im unteren Bereich bzw. an einem Boden im Behälterinneren 4 vertikal ausgerichtet und weist eine Ablauföffnung 7 an ihrem oberen Ende auf, über welche abfließende Flüssigkeit in den Ablaufsiphon 3 gelangt. An das erste Teilstück 3a schließt sich ein zweites horizontal ausgerichtetes Teilstück 3b an. Anschließend folgt das dritte Teilstück 3c, das je nach Höhe des Behälters länger sein kann und sich vertikal nach oben erstreckt und an welches sich ein viertes Teilstück 3d in waagerechter Ausrichtung anschließt, das sich durch eine Behälterwandöffnung 5 aus dem Behälterinneren 4 nach außen erstreckt. Dort schließt sich z.B. ein Sammel- bzw. Abwasserkanal an, der die abfließende Flüssigkeit aufnimmt.

Im Behälterinneren 4 ist gestrichelt ein im gezeigten Zustand gleichbleibendes Flüssigkeitsniveau 8 der im Behälter aufgenommenen Flüssigkeit 14 angedeutet. Das Flüssigkeitsniveau 8 gemäß Figur 1 wird durch ein Ablaufniveau bestimmt, wenn in einem Regelbetrieb der Abscheidevorrichtung keine Flüssigkeit in den Behälter zufließt und damit ggf. mit geringer Zeitverzögerung auch keine Flüssigkeit aus dem Behälter abfließt, was Figur 1 dargestellt.

Außerdem ist zum selbsttätigen Verschließen der Ablauföffnung 7 ein Schwimmerverschluss 9 im Bereich oberhalb der Ablauföffnung 7 vorgesehen. Der selbsttätige Schwimmerverschluss 9 umfasst einen Schwimmerkörper 10, welcher als eine dicht geschlossene hohle Schwimmerkugel 11 ausgebildet sein kann, und eine daran unten sich anschließende vertikal erstreckende Schwimmerstange 12 mit einer horizontal ausgerichtete Verschlussplatte 13 zum Freigeben oder Verschließen der Ablauföffnung 7.

Im gezeigten Zustand gemäß Figur 1 schwimmt der Schwimmerkörper 10 austariert nahezu vollständig unterhalb des Flüssigkeitsniveaus 8 in der Flüssigkeit 14 im Behälterinneren 4. Zur seitlichen Führung der Bewegung des Schwimmerkörpers 10 in der Flüssigkeit 14 ist außerdem eine Schwimmerkörperführung 15 vorhanden. Sinkt der Schwimmerkörper 10 in der Flüssigkeit 14 ab, beispielsweise wenn die Flüssigkeit 14 oben eine Leichtflüssigkeitsschicht (nicht gezeigt) ausbildet, in welcher der Schwimmerkörper 10 absinkt, kann bei einer entsprechenden Schichtdicke der Leichtflüssigkeit die Verschlussplatte 13 die Ablauföffnung 7 verschließen, so dass keine Flüssigkeit 14 mehr aus dem Behälterinneren 4 über den Ablauf 2 aus dem Behälter abfließen kann. In diesem Zustand muss das Behälterinnere 4 geleert und in einen Ausgangszustand für einen Regelbetrieb gebracht werden.

Ist die Schichtdicke der Leichtflüssigkeit geringer als beim oben genannten Zustand oder befindet sich keine Leichtflüssigkeit in der Flüssigkeit, also befindet sich insbesondere nur Wasser im Behälter, bleibt die Verschlussplatte 13 des Schwimmerkörpers 10 beabstandet oberhalb der Ablauföffnung 7, so dass der Ablauf 2 gemäß Figur 1 frei ist.

In Figur 1 ist ein kreisförmiger Bereich des Ablaufsiphons 3 hervorgehoben, welcher in Figur 2 teils geschnitten näher dargestellt ist.

Figur 2 zeigt den Bereich des Ablaufsiphons 3 am oberen Ende des Teilstücks 3c mit dem daran anschließenden Teilstück 3d, das sich durch die Behälterwandöffnung 5 erstreckt. Im Übergang der Teilstücke 3c und 3d ist im Ablauf 2 eine Rückstausicherung als Rückstauventil 16 ausgebildet, das hier als einfaches Klappenventil umfasst und eine Rückstauklappe 17 aufweist, welche in Figur 2 in einer geschlossenen Stellung dargestellt ist, die selbsttätig bzw. schwerkraftunterstützt eingenommen wird. Die Rückstauklappe 17 ist über ein Schwenkgelenk 18 schwenkbar um eine horizontale Schwenkachse S am oberen Rand des Teilstück 3d bzw. im Bereich zwischen Teilstück 3c und 3d vorhanden. Das Schwenkgelenk 18 ist vorteilhaft in dem Ablaufsiphon 3 nahe an einem Gehäuse 19 positioniert bzw. randnah in der Ablaufleitung 6. So stellt es keinen nennenswerten Strömungswiderstand dar bzw. bildet wenig Angriffsfläche für ein Anhaften von Verschmutzungen aus der vorbeifließenden Flüssigkeit. Die Rückstauklappe 17 ist ausgehend von der in Figur 2 gezeigten Stellung um maximal ca. 90 Winkelgrade nach oben verschwenkbar und gibt dabei den gesamten Strömungsquerschnitt der Ablaufleitung 6 frei. Im Bereich des Rückstauventils 16 ist ein gegenüber dem Durchmesser der Teilstücke 3c und 3d vergrößertes Gehäuse 19 vorhanden, so dass die Rückstauklappe 17 ungehindert frei verschwenken kann. In das Gehäuse 19, das beispielsweise quader- bzw. würfelförmig oder zylindrisch sein kann, ragt das obere Ende des Teilstücks 3c mit der daran vorhandenen Rückstauklappe 17 hinein. Das Gehäuse 19 weist zudem eine Öffnung 19a auf, an welche das Teilstück 3d anschließt.

Dem Rückstauventil 16 ist am oberen Ende des Teilstücks 3c eine Ventilöffnung 20 zugeordnet, die mit der Rückstauklappe 17 verschließbar ist oder freigegeben wird. Das Teilstück 3c steht geringfügig über einen Boden 19b des Gehäuses 19 über bzw. ist mit der Ventilöffnung 20, welche von der umlaufenden Oberkante des Teilstücks 3c umrandet ist und den Ventilsitz des Rückstauventils 16 bildet, versetzt zum Boden 19b. Der Boden 19b des Gehäuses 19 ist in Richtung des Teilstücks 3d schräg abfallend ausgebildet, so dass sich keine Flüssigkeit im Bereich des Gehäuses 19 anstauen kann, sondern im Gefälle abfließt.

Figur 2 zeigt die Rückstauklappe 17, die unter dem Eigengewicht mit einer Unterseite 17b auf der Oberkante des Teilstücks 3c aufliegt und die Ventilöffnung 20 verschließt.

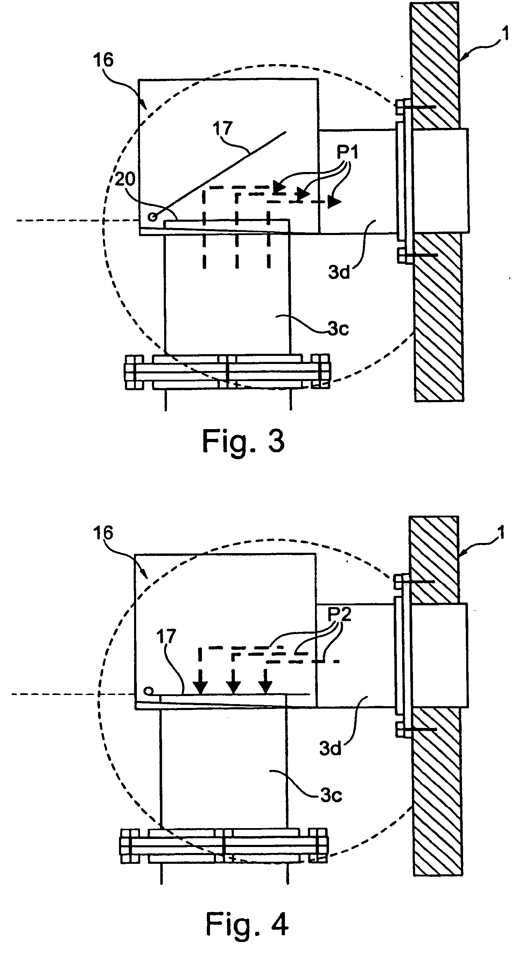

Von diesem Zustand ausgehend kann keine Flüssigkeit von außen über das Teilstück 3d in den Behälter zufließen, da die anströmende Flüssigkeit die Rückstauklappe 17 nicht öffnen kann, sondern vielmehr sich oberhalb einer Oberseite 17a der Rückstauklappe 17 anstaut und die Andrückkraft verstärkt. Dies zeigt schematisch Figur 4. Die Andrückkraft, welche die Rückstauklappe 17 gegen den Ventilsitz bzw. die Oberkante des Teilstücks 3c drückt, ist abhängig vom über das Teilstück 3d anstehenden hydraulischen Druck der ablaufseitig anstehenden Flüssigkeitssäule.

Nur wenn der hydraulische Druck in der Ablaufleitung 6, der an der Unterseite 17b der Rückstauklappe 17 im Teilstück 3c ansteht, größer ist als der Gegendruck, der also zum Beispiel durch auf der Oberseite 17a der Rückstauklappe 17 anstehenden hydraulischen Druck und/oder durch das Eigengewicht der Rückstauklappe 17 bedingt ist, wird die Rückstauklappe 17 etwas nach oben gedrückt und Flüssigkeit kann nach außen dringen.

Das Rückstauventil 16 mit dem Gehäuse 19 und Teilen der Teilstücke 3c und 3d ist als separate Baueinheit im Ablauf 2 bzw. im Ablaufsiphon 3 über lösbare Flanschverbindungen 21 und 22 mit Schraubmitteln eingebaut. Die Flanschverbindung 21 dient zur Verbindung der Baueinheit mit angrenzenden Teilen des Teilstücks 3c und die Flanschverbindung 22 zum Anbau der Baueinheit an Teilen des Teilstücks 3d bzw. der Behälterwand 1. Die Flanschverbindung 22 ist beispielhaft mit Schraubmitteln 23, 24 an der Behälterwand 1 fixiert und gesichert. Das Rückstauventil 16 kann komplett vorgefertigt im Ablauf 2 an den entsprechenden Verbindungsabschnitten fixiert werden.

Figur 3 zeigt das Rückstauventil gemäß Figur 1 in einem Zustand im Regelbetrieb des Behälters. Dabei strömt über einen nicht dargestellten Zulauf Flüssigkeit in den Behälter ein und über die offene Ablauföffnung 7 und den Ablaufsiphon 3 bei angehobener Rückstauklappe 17 aus dem Behälter ab. Die Strömung der Flüssigkeit vom Teilstück 3c durch die Ventilöffnung 20 in das Teilstück 3d ist schematisiert durch Pfeile P1 angedeutet.

Figur 4 zeigt eine Rückstausituation, bei welcher Flüssigkeit von außerhalb des Behälters an der Oberseite 17a der Rückstauklappe 17 ansteht und von oben auf die Rückstauklappe 17 gemäß der Pfeile P2 drückt, so dass keine Flüssigkeit durch die Ventilöffnung 20 in das Behälterinnere 4 gelangen kann.

### Bezugszeichenliste:

- 1: Behälterwand
- 2: Ablauf
- 3: Ablaufsiphon
- 3a: Teilstück
- 3b: Teilstück
- 3c: Teilstück
- 3d: Teilstück
- 4: Behälterinnere
- 5: Behälterwandöffnung
- 6: Ablaufleitung
- 7: Ablauföffnung
- 8: Flüssigkeitsniveau
- 9: Schwimmerverschluss
- 10: Schwimmerkörper
- 11: Schwimmerkugel
- 12: Schwimmerstange
- 13: Verschlussplatte
- 14: Flüssigkeit
- 15: Schwimmerkörperführung
- 16: Rückstauventil
- 17: Rückstauklappe
- 17a: Oberseite
- 17b: Unterseite
- 18: Schwenkgelenk
- 19: Gehäuse
- 19a: Öffnung
- 19b: Boden
- 20: Ventilöffnung
- 21: Flanschverbindung
- 22: Flanschverbindung
- 23: Schraubmittel
- 24: Schraubmittel

## Patentansprüche

1. Vorrichtung zur Sicherung eines Behälters gegen ein Eindringen von Flüssigkeit über einen Ablauf (2) des Behälters, wobei in einem Regelbetrieb des Behälters die Flüssigkeit über einen Zulauf dem Behälter zufließen und über den Ablauf (2) aus dem Behälter abfließen kann, wobei im Behälter ein in der Flüssigkeit schwimmfähiger Schwimmerkörper (10) vorhanden ist, dessen Position in dem Behälter von der Art und/oder der Menge der Flüssigkeit in dem Behälter abhängt, und der Schwimmerkörper (10) für einen selbsttätigen Verschluss einer Ablauföffnung (7) des Ablaufs (2) ausgebildet ist, **dadurch gekennzeichnet, dass** ein im Behälter integrierbares Rückstauventil (16) vorhanden ist, das im im Behälter integrierten Zustand im Ablauf (2) eine Ventilöffnung (20) für Flüssigkeit selbsttätig freigibt oder sperrt, wobei die Ventilöffnung (20) in Abfließrichtung der Flüssigkeit über den Ablauf nach der Ablauföffnung (7) positioniert ist, und wobei das Rückstauventil (16) ausgebildet ist, einen sich in vertikaler Ausrichtung erstreckenden Abschnitt des Ablaufs (2) zu sperren und eine Rückstauklappe (17) umfasst, welche schwerkraftunterstützt die Ventilöffnung 20 verschließt.

2. Vorrichtung nach Anspruch 1, **dadurch gekennzeichnet, dass** das Rückstauventil (16) derart ausgebildet ist, das Eindringen von Flüssigkeit über den Ablauf (2) in den Behälter durch Sperren der Ventilöffnung (20) zu verhindern.

3. Vorrichtung nach Anspruch 1 oder 2, **dadurch gekennzeichnet, dass** das Rückstauventil (16) derart ausgebildet ist, die Ventilöffnung (20) für Flüssigkeit in Abhängigkeit von einem an dem Rückstauventil (16) anstehenden hydraulischen Druckverhältnis selbsttätig freizugeben oder zu sperren.

4. Vorrichtung nach einem der vorhergehenden Ansprüche, **dadurch gekennzeichnet, dass** das Rückstauventil (16) ausgebildet ist, bei Regelbetrieb des Behälters, wenn keine Flüssigkeit über den Ablauf (2) aus dem Behälter abfließt, die Ventilöffnung (20) zu sperren.

5. Vorrichtung nach einem der vorhergehenden Ansprüche, **dadurch gekennzeichnet, dass** das Rückstauventil (16) in einer separat einbaubaren Baueinheit integriert ist.

6. Vorrichtung nach Anspruch 5, **dadurch gekennzeichnet, dass** die Baueinheit über Flanschabschnitte (21, 22) und Schraubmittel (23, 24) mit benachbarten Abschnitten verbindbar ist.

7. Vorrichtung nach einem der vorhergehenden Ansprüche 5 und 6, **dadurch gekennzeichnet, dass** die Baueinheit im eingebauten Zustand einen Abschnitt einer Ablaufleitung (6) des Ablaufs (2) umfasst, in welchem das Rückstauventil (16) integriert ist.

8. Vorrichtung nach einem der vorhergehenden Ansprüche, **dadurch gekennzeichnet, dass** das Rückstauventil (16) als Klappenventil ausgebildet ist.

9. Vorrichtung nach einem der vorhergehenden Ansprüche, **dadurch gekennzeichnet, dass** das Rückstauventil (16) eine schwenkbar gelagerte Verschlussklappe (17) umfasst.

10. Vorrichtung nach Anspruch 9, **dadurch gekennzeichnet, dass** die Verschlussklappe (17) in einer zumindest annähernd horizontalen Ausrichtung den Ablauf (2) sperrt.

11. Abscheidevorrichtung mit einem Behälter, wobei in einem Regelbetrieb des Behälters die Flüssigkeit über einen Zulauf zufließen und über einen Ablauf (2) aus dem Behälter abfließen kann, mit einem in der Flüssigkeit schwimmfähigen Schwimmerkörper (10), dessen Position in dem Behälter von der Art und/oder der Menge der Flüssigkeit in dem Behälter abhängt, und der Schwimmerkörper (10) für einen selbsttätigen Verschluss einer Ablauföffnung (7) des Ablaufs (2) ausgebildet ist, **dadurch gekennzeichnet, dass** im Behälter integriert eine Vorrichtung nach einem der vorhergehenden Ansprüche vorhanden ist.

## Claims

1. Device for securing a container against the penetration of fluid via an outlet (2) of the container, wherein during the regular operation of the container the fluid can flow into the container via an inlet and out of the container via the outlet (2), wherein in the container there is a floating body (10) floating on the fluid, the position of which in the container depends on the type and/or amount of fluid in the container, and the floating body (10) is designed to automatically close an outlet opening (7) of the outlet (2), **characterised in that** a backflow valve (16) is provided which can be integrated into the container which valve, when integrated into the container, automatically opens or closes a valve opening (20) for fluid in the outlet (2), wherein the valve opening (20) is positioned in the outflow direction of the fluid over the outlet after the outlet opening (7), and wherein the backflow valve (16) is designed to block a section of the outflow (2) extending in vertical direction and comprises a backflow flap (17) which closes the valve opening (20) supported by gravity.

2. Device according to claim 1, **characterised in that** the backflow valve (16) is designed to prevent the penetration of fluid via the outlet (2) into the container by blocking the valve opening (20).

3. Device according to claim 1 or 2, **characterised in that** the backflow valve (16) is designed to automatically open or close the valve opening (20) for fluid as a function of a hydraulic pressure ratio at the backflow valve (16).

4. Device according to any one of the preceding claims, **characterised in that** the backflow valve (16) is designed, during the regular operation of the container, to block the valve opening (20) when no fluid is flowing out of the container via the outlet (2).

5. Device according to any one of the preceding claims, **characterised in that** the backflow valve (16) is integrated into a separately installed structural unit.

6. Device according to claim 5, **characterised in that** the structural unit can be connected to adjacent sections via flange sections (21, 22) and screw means (23, 24).

7. Device according to any one of the preceding claims 5 and 6, **characterised in that** the structural unit in the installed state comprises a section of an outlet line (6) of the outlet (2) in which the backflow valve (16) is integrated.

8. Device according to any one of the preceding claims, **characterised in that** the backflow valve (16) is designed as a flap valve.

9. Device according to any one of the preceding claims, **characterised in that** the backflow valve (16) comprises a pivotably mounted closing flap (17).

10. Device according to claim 9, **characterised in that** the closing flap (17) blocks the outlet (2) in an orientation that is at least approximately horizontal.

11. Separating device with a container, wherein during the regular operation of the container the fluid can flow into the container via an inlet and can flow out of the container via an outlet (2), with a floating body (10) floating in the fluid, the position of which in the container depends on the type and/or amount of fluid in the container, and the float (10) is designed for automatically closing an outlet opening (7) of the outlet (2), **characterised in that** a device according to any one of the preceding claims is integrated into the container.

## Revendications

1. Dispositif de protection d'un récipient contre un reflux de liquide via une évacuation (2) du récipient, le liquide, lorsque le récipient fonctionne normalement, pouvant affluer dans le récipient par une arrivée et pouvant s'écouler hors du récipient par l'évacuation (2), un flotteur (10) pouvant flotter dans le liquide, dont la position dans le récipient dépend de la nature et/ou de la quantité du liquide dans le récipient, étant présent dans le récipient, et le flotteur (10) étant conçu pour une fermeture automatique d'un orifice d'évacuation (7) de l'évacuation (2), **caractérisé en ce qu**'une valve anti-retour (16) pouvant être intégrée dans le récipient est présente, laquelle, quand elle est intégrée dans le récipient dans l'évacuation, libère ou bloque automatiquement un orifice (20) de la valve pour le liquide, l'orifice (20) de la valve étant positionné dans la direction d'écoulement du liquide via l'évacuation en aval de l'orifice d'évacuation (7), et la valve anti-retour (16) étant conçue pour bloquer une section de l'évacuation (2) s'étendant dans la direction verticale et comprenant un clapet anti-retour (17), lequel ferme l'orifice (20) de la valve par gravitation.

2. Dispositif selon la revendication 1, **caractérisé en ce que** la valve anti-retour (16) est conçue de manière à empêcher la pénétration de liquide dans le récipient via l'évacuation (2) en bloquant l'orifice (20) de la valve.

3. Dispositif selon la revendication 1 ou 2, **caractérisé en ce que** la valve anti-retour (16) est conçue de manière à libérer ou à bloquer automatiquement l'orifice (20) de la valve pour le liquide en fonction d'un rapport de pression hydraulique agissant sur la valve anti-retour (16).

4. Dispositif selon l'une des revendications précédentes, **caractérisé en ce que** la valve anti-retour (16) est conçue pour bloquer l'orifice (20) de la valve, lors d'un fonctionnement normal du récipient, si aucun liquide ne s'écoule du récipient via l'évacuation (2).

5. Dispositif selon l'une des revendications précédentes, **caractérisé en ce que** la valve anti-retour (16) est intégrée dans une unité modulaire pouvant être montée séparément.

6. Dispositif selon la revendication 5, **caractérisé en ce que** l'unité modulaire peut être reliée à des sections voisines au moyen de sections de bride (21, 22) et de moyens de vissage (23, 24).

7. Dispositif selon l'une des revendications 5 et 6, **caractérisé en ce que** l'unité modulaire, une fois montée, comprend une section d'une conduite d'évacuation (6) de l'évacuation (2), section dans laquelle est intégrée la valve anti-retour (16).

8. Dispositif selon l'une des revendications précédentes, **caractérisé en ce que** la valve anti-retour (16) est réalisée sous la forme d'une valve à clapet.

9. Dispositif selon l'une des revendications précédentes, **caractérisé en ce que** la valve anti-retour (16) comprend un clapet de fermeture (17) monté pivotant.

10. Dispositif selon la revendication 9, **caractérisé en ce que** le clapet de fermeture (17) bloque l'évacuation (2) dans une orientation au moins approximativement horizontale.

11. Dispositif de séparation comprenant un récipient, le liquide, lorsque le récipient fonctionne normalement, pouvant affluer par une arrivée et pouvant s'écouler hors du récipient par une évacuation (2), un flotteur (10) pouvant flotter dans le liquide et dont la position dans le récipient dépend de la nature et/ou de la quantité du liquide dans le récipient, et ledit flotteur (10) étant conçu pour une fermeture automatique d'un orifice d'évacuation (7) de l'évacuation (2), **caractérisé en ce qu**'un dispositif selon l'une des revendications précédentes est intégré dans le récipient.
